(19) Europäisches Patentamt
European Patent Office
Office européen des brevets

(11) **EP 0 517 109 B1**

(12) **EUROPÄISCHE PATENTSCHRIFT**

(45) Veröffentlichungstag und Bekanntmachung des Hinweises auf die Patenterteilung:
**28.01.1998 Patentblatt 1998/05**

(51) Int. Cl.[6]: **B32B 27/20**, B32B 27/32, B32B 27/18, B65D 65/40

(21) Anmeldenummer: **92109042.9**

(22) Anmeldetag: **29.05.1992**

(54) **Siegelbare weisse Folie aus Polyolefinen**

Sealable white film made of polyolefins

Film blanc scellable en polyoléfines

(84) Benannte Vertragsstaaten:
**BE DE FR GB IT NL**

(30) Priorität: **06.06.1991 DE 4118572**

(43) Veröffentlichungstag der Anmeldung:
**09.12.1992 Patentblatt 1992/50**

(73) Patentinhaber:
**HOECHST AKTIENGESELLSCHAFT
65926 Frankfurt am Main (DE)**

(72) Erfinder:
 • **Schuhmann, Detlef Erich, Dr.
 W-6229 Kiedrich (DE)**
 • **Peiffer, Herbert, Dr.
 W-6500 Mainz-Finthen (DE)**
 • **Murschall, Ursula, Dr.
 W-6505 Nierstein (DE)**
 • **Schlögl, Gunter, Dr.
 W-6233 Kelkheim (DE)**

(56) Entgegenhaltungen:
EP-A- 0 004 633    EP-A- 0 143 567
EP-A- 0 515 969    DE-A- 3 611 341
US-A- 3 900 670

Anmerkung:    Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Biaxial orientierte Polypropylenfolien finden in transparenter und opaker Form insbesondere im Verpackungsbereich in außerordentlich großem Umfang Verwendung. Mit opaker Folie eingepackte Ware, insbesondere Schokoladenriegel oder Biscuits, sind deutlich besser lichtgeschützt als mit transparenter Folie eingepackte Ware, was im Hinblick auf die dadurch verbesserte Langzeithaltbarkeit der Ware angestrebt wird. Opake Folien sind vakuolenhaltig und im Stand der Technik wohlbekannt.

Nachteile ergeben sich bei opaken Folien, wenn sie beispielsweise auf schnellaufenden vollautomatischen Verpackungsmaschinen zu Beuteln oder dergleichen verarbeitet werden sollen. Bei solchen Maschinen wird die Folie üblicherweise mittels Zugkraft über eine entsprechend ausgebildete Formschulter geführt, wodurch aus der flachen Folie ein Schlauch mit überlappenden Rändern entsteht. Durch die weiteren Schritte Siegeln, Einfüllen des Füllgutes und Abtrennen werden schließlich die Beutel erhalten.

Beim Führen von opaken, vakuolenhaltigen Folien über die Formschulter zur Bildung von Schläuchen wird häufig beobachtet, daß in Längsrichtung der Folie bzw. des gebildeten Schlauches mehr oder weniger stark ausgeprägte streifenförmige Markierungen entstehen, die das optische Erscheinungsbild der Verpackung nachteilig beeinträchtigen.

Im Bereich der Streifen sind nämlich aufgedruckte Schriftzüge nur mit Mühe zu entziffern, und ein solcher Beutel wird von Weiterverarbeitern und Herstellern hochwertiger Produkte nicht akzeptiert, denn er erzeugt beim Endverbraucher den Eindruck niederster Qualität. Ursache für die Markierungen ist offensichtlich die gegenüber transparenten Folien stark erhöhte Kompressibilität vakuolenhaltiger opaker Folien, bei transparenten Folien sind die besagten Markierungen nämlich nicht sichtbar.

Die EP-A-0 143 567 beschreibt eine mehrschichtige dekorative Verpackungsfolie, welche hoch lichtabsorbierende Farbpigmente enthält. Die Folie hat eine opaleszierende oder metallisch glänzende Optik. Sie ist aufgebaut aus einer Basisschicht, welche das farbige Pigment enthält und einer transparenten Deckschicht, welche Calciumcarbonat in einer Menge von 1 bis 40 % enthält. Das farbige Pigment in der Basisschicht trägt wesentlich zur Lichtundurchlässigkeit der Folie bei. Beim Verstrecken der Folie entstehen Vakuolen in der partikelhaltigen Deckschicht, wodurch das opaleszierende bis metallische Aussehen der Folie erzielt wird. Folien mit vakuolenhaltiger Deckschicht haben sehr niedrige Glanzwerte. Aufgrund der Farbpigmente in der Basisschicht hat die Folie kein weißes Aussehen.

Die DE 36 11 341 beschreibt eine opake Folie für den Bonbondreheinschlag, welche aus einer Polymerenmischung und Füllstoffen besteht. Die Polymerenmischung besteht aus 40-60 Gew.-% Polypropylen und 35-55 Gew. % Polystyrol. Füllstoffe sind in einer Menge von 5-15 Gew.-% enthalten. Die Folie zeichnet sich durch sehr gute Dreheigenschaften aus. Eine derartige drehfähige Folie ist als Verpackungsfolie auf schnelllaufenden Verpackungmaschinen ungeeignet.

Die EP-A-0 004 633 beschreibt eine heißsiegelfähige opake Folie, welche in der Basisschicht Füllstoffe in einer Menge von 1 bis 25 Gew.-% enthält. Die Folie zeichnet sich durch besonders hohe Glanzwerte aufgrund der aufgebrachten Siegelschicht aus. Diese Folien weisen ganz besonders das eingangs erwähnte Problem auf, daß beim Führen. der Folie über die Verpackungsmachine streifenförmige Markierungen entstehen.

US 3.900,670 beschreibt eine opake Folie mit einer fettbeständigen Deckschicht. Die Basisschicht hat eine Zellstruktur und enthält Füllstoffe in einer Menge von 26- 50 Gew.-%. Folien mit derartig hohen Füllstoffgehalten sind zur Anwendung auf schnelllaufenden Verpackungmaschinen völlig ungeeignet.

Die EP-A-0 515 969 ist eine nicht vorveröffentliche Druckschrift. Sie beschreibt opake Folien mit einer Zwischenschicht. Die Basisschicht enthält 2-7 Gew.-% Calciumcarbonat. Die Folie kann Titandioxid in ihrer Basisschicht oder in ihrer Zwischenschicht enthalten. Die Deckschicht hat eine Dicke von höchstens 0,4 um.

Aufgabe der vorliegenden Erfindung war es daher, eine weiße Folie zu entwickeln, die dem Füllgut einerseits einen hohen Lichtschutz bietet und die andererseits auf schnellaufenden vollautomatischen Verpackungsmaschinen zu Verpackungsbeuteln verarbeitbar ist, ohne daß sich auf der Folie sichtbare Streifen bilden. Darüber hinaus soll der intrinsische Lichtschutz der Folie besser sein als der Lichtschutz, der durch Bedruckung, beispielsweise mit weißer Farbe, erreichbar ist. Gleichzeitig soll die Folie optisch ansprechen, insbesondere soll sie auf der äußeren bedruckbaren Seite einen ähnlich hohen Glanz besitzen wie vergleichbare transparente Folien, und die mechanischen Eigenschaften der Folie sollen dabei ebenfalls vergleichbar sein mit denjenigen von transparenten Folien, vor allem aber soll die Dichte nicht größer als 0,92 $g/cm^3$ sein und 0,9 $g/cm^3$ nicht deutlich unterschreiten.

Die Aufgabe wird erfindungsgemäß durch eine Folie der eingangs genannten Gattung gelöst, deren kennzeichnenden Merkmale darin bestehen, daß sie wenigstens einen dreischichtigen Aufbau besitzt, umfassend eine Basisschicht aus Propylenpolymeren enthaltend höchstens 2 Gew.-% Calciumcarbonat wobei 2 Gew.-% ausgenommen werden mit einer mittleren Teilchengröße bis höchstens 2,0 µm und 0 bis 25 Gew.-% Titandioxid, bezogen jeweils auf das Gesamtgewicht der Basisschicht, eine Zwischenschicht aus Propylenpolymeren enthaltend 0 bis 25 Gew.-% Titandioxid, bezogen auf das Gesamtgewicht der Zwischenschicht, und eine Deckschicht aus Siegelrohstoff, und daß die Folie insgesamt wenigstens 2 Gew.-% Titandioxid enthält, bezogen auf das Gesamtgewicht der Folie.

Unter dem Begriff Propylenpolymere der Basisschicht bzw. der Zwischenschicht der Folie soll im Rahmen der vorliegenden Erfindung ein isotaktisches Homopolymerisat oder Copolymerisat des Propylens mit Ethylen oder Alpha-Olefinen mit 4 bis 8 C-Atomen verstanden werden oder eine Mischung aus Propylenhomo- und Propylencopolymerisaten und/oder anderen Polyolefinen, insbesondere mit 2 bis 6 C-Atomen, wobei die Mischung mindestens 50, insbesondere mindestens 75 Gew.-% Propylenhomopolymerisat enthält. Das isotaktische Homopolymerisat hat zweckmäßigerweise einen in siedendem n-Heptan löslichen Anteil von höchstens 15 Gew.-%, vorzugsweise von höchstens 10 Gew.-%. In den Copolymerisaten beträgt die Comonomermenge von Ethylen und den Alpha-Olefinen mit 4 bis 8 C-Atomen im allgemeinen maximal 10 Gew.-%, bezogen auf das Copolymerisat.

Bevorzugte Comonomere sind Ethylen und Buten-(1). Geeignete Polyolefine in der Polymermischung sind hochdichtes Polyethylen (HDPE), niederdichtes Polyethylen (LDPE) und lineares niederdichtes Polyethylen (LLDPE), wobei der Anteil dieser Polyolefine jeweils 15 Gew.-%, bezogen auf die Polymermischung, nicht übersteigt. Die Propylenpolymeren haben zweckmäßigerweise einen Schmelzflußindex im Bereich von 0,5 g/10 min bis 8 g/10 min bei 230 °C und 21,6 N Belastung (DIN 53 735), insbesondere von 1,5 g/10 min bis 4 g/10 min. Das Polymere bzw. die Polymermischung für die Zwischenschicht/en wird unabhängig vom Aufbau der Basisschicht gewählt und umgekehrt. Daher können Basis- und Zwischenschicht sowohl gleiche als auch verschiedene Polymere bzw. Polymermischungen enthalten. Entsprechendes gilt auch für die Zwischenschichten, wenn zwei vorhanden sind, welche ebenfalls gleiche oder verschiedene Polymere bzw. Polymermischungen enthalten können.

Die Calciumcarbonatteilchen bestehen z. B. aus natürlichem Gesteinspulver, z. B. aus Kalkspat, Kalkstein, Calcit oder Kreide, sofern sie nicht durch andere Stoffe zu stark verunreinigt sind. Es können auch durch Fällung erzeugte Carbonat-Teilchen eingesetzt werden.

Gefälltes Calciumcarbonat kann nach verschiedenen Verfahren hergestellt werden. Gewöhnlich wird hierzu natürliches Gesteinspulver auf Basis von Calciumcarbonat, insbesondere natürlicher Kalkstein, oberhalb 900 °C in Calciumoxid und Kohlendioxid zersetzt. Nach dem Löschen des gebrannten Kalkes mit Wasser wird mit gereinigtem Kohlendioxid carbonisiert. Man erhält so die Calciumcarbonat-Teilchen in wäßriger Suspension.

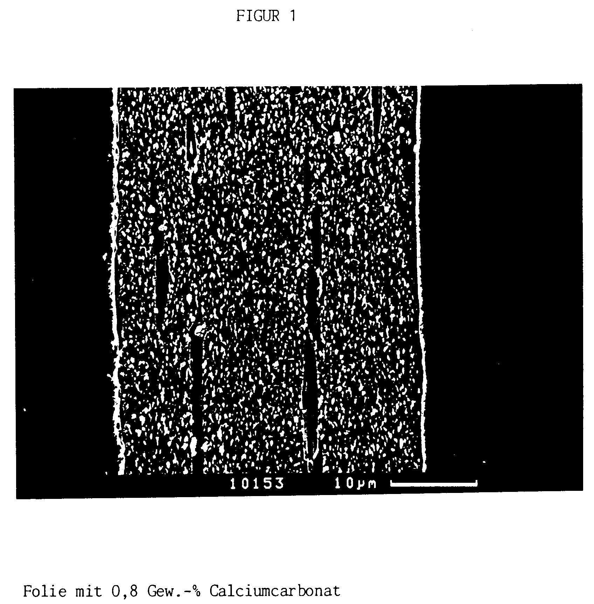

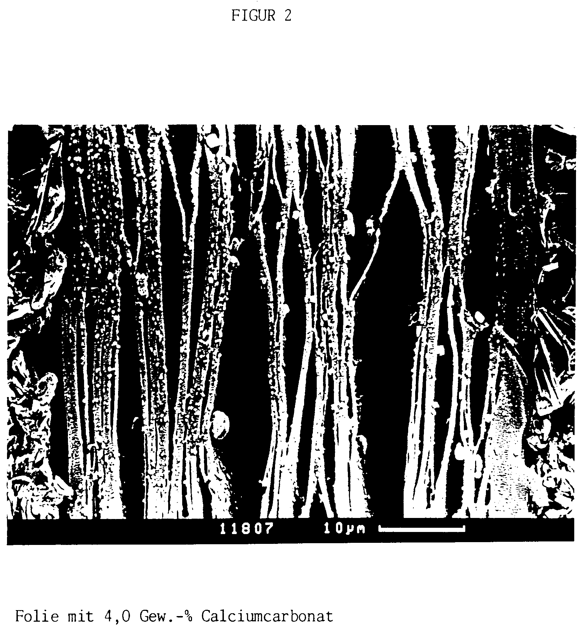

Das in der Basisschicht enthaltene Calciumcarbonat soll erfindungsgemäß vorzugsweise einen im Vergleich mit dem Calciumcarbonat, das in üblichen opaken Polypropylenfolien enthalten ist, kleinen mittleren Partikeldurchmesser besitzen und in einer Menge von höchstens bis zu 2 Gew.-%, ausgenommen 2 Gew.-%, vorzugsweise nicht mehr als 1,5 Gew.-%, bezogen auf die Basisschicht, vorhanden sein. Besonders bevorzugt soll die Menge an Calciumcarbonat im Bereich zwischen 0,3 und 1,0 Gew.-% liegen. Folie, die in der beschriebenen Weise mit Calciumcarbonat pigmentiert ist, unterscheidet sich beträchtlich von den herkömmlichen bekannten opaken Folien. Dies veranschaulicht deutlich ein Vergleich der Figuren 1 und 2.

Figur 1 zeigt eine rasterelektronenmikroskopische Aufnahme von einem senkrechten Schnitt durch eine Folie in seitlicher Ansicht. Die dargestellte Folie enthält nur 0,8 Gew.-% Calciumcarbonat mit einem mittleren Teilchendurchmesser von 1,5 µm.

Figur 2 zeigt ebenfalls eine rasterelektronenmikroskopische Aufnahme von einem senkrechten Schnitt durch eine Folie in seitlicher Ansicht und bei gleicher Vergrößerung wie Figur 1. Die in Figur 2 dargestellte Folie enthält aber eine Menge von 4,0 Gew.-% Calciumcarbonat mit einem mittleren Teilchendurchmesser von 3 µm. Durch den hohen Gehalt an Calciumcarbonat entsteht der in Figur 2 dargestellte bekannte lamellenartige Aufbau opaker Folien, der für die niedrige Dichte von kleiner 0,80 g/cm$^3$ verantwortlich ist. Bei kleinem Gehalt an Calciumcarbonat entstehen keine Lamellen, sondern nur vereinzelt kleinere Hohlräume, dargestellt in Figur 1.

Eine besondere Bedeutung kommt der Größe der Calciumcarbonatteilchen zu. In Standard-Opak-Folien beträgt der übliche mittlere Teilchendurchmesser etwa 3 µm bei einem oberen Schnitt von etwa 12 µm. Hierdurch entsteht eine vergleichsweise hohe Rauhigkeit der Oberflächen der vakuolenhaltigen Schicht. Der Glanz der Folie wird dadurch entscheidend beeinträchtigt. Die Oberfläche der Folie wird umso glatter je kleiner der Partikeldurchmesser ist. Die Teilchengröße läßt sich jedoch nicht beliebig verkleinern, weil ab einem bestimmten Punkt die Dispergierbarkeit des Calciumcarbonats verschlechtert wird und es zu Agglomeraten kommt. Unterhalb eines bestimmten Partikeldurchmessers bilden sich darüber hinaus auch keine Vakuolen mehr. Als eine obere Grenze hat sich im Rahmen der vorliegenden Erfindung ein mittlerer Partikeldurchmesser von 2 µm als zweckmäßig erwiesen, vorzugsweise soll der mittlere Partikeldurchmesser zwischen 1,0 und 1,5 µm liegen.

Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z. B. nach dem Chlorid- oder dem Sulfat-Prozeß, hergestellt werden. Ihre Menge in der Basisschicht beträgt 0 bis 25 Gew.-%, vorzugsweise 2 bis 12 Gew.-%, bezogen auf die Basisschicht. In der Zwischenschicht können ebenfalls 0 bis 25 Gew.-% Titandioxid, bevorzugt 0 bis 10 Gew.-%, bezogen auf die jeweilige Zwischenschicht, enthalten sein. Insgesamt soll die Folie jedoch mindestens 2 Gew.-% Titandioxid, bezogen auf das Gesamtgewicht der Folie, enthalten, wobei für den Gesamtgehalt ein Bereich von 4 bis 25 Gew.-% (bezogen auf das Gesamtgewicht) bevorzugt ist. Die mittlere Teilchengröße ist relativ klein und liegt vorzugsweise im Bereich von 0,10 bis 0,30 μm. Durch Titandioxid der beschriebenen Art entstehen innerhalb der Polymermatrix keine Vakuolen während der Folienherstellung.

Die Titandioxidteilchen können einen Überzug aus anorganischen Oxiden besitzen, wie er üblicherweise als Überzug für $TiO_2$-Weißpigment in Papieren oder Anstrichmitteln zur Verbesserung der Lichtechtheit eingesetzt wird. $TiO_2$ ist bekanntlich photoaktiv. Bei Einwirkung von UV-Strahlen bilden sich freie Radikale auf der Oberfläche der Partikel. Diese freien Radikale können zu den filmbildenden Bestandteilen der Anstrichmittel wandern, was zu Abbaureaktionen und Vergilbung führt. Zu den besonders geeigneten Oxiden gehören die Oxide von Aluminium, Silicium, Zink oder Magnesium oder Mischungen aus zwei oder mehreren dieser Verbindungen. $TiO_2$-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymerschmelze ausreichend thermostabil sein. Polare Gruppen sind beispielsweise -OH, -OR, -COOX, (X = R, H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z. B. Polydimethylsiloxan und Polymethylhydrogensiloxan.

Der Überzug auf den Titandioxidteilchen besteht gewöhnlich aus 1 bis 12 g, insbesondere 2 bis 6 g, anorganischer Oxide und 0,5 bis 3 g, insbesondere 0,7 bis 1,5 g, organischer Verbindung, bezogen auf 100 g Titandioxidteilchen. Der Überzug wird auf die Teilchen in wäßriger Suspension aufgebracht. Die anorganischen Oxide werden aus wasserlöslichen Verbindungen, z. B. Alkali-, insbesondere Natriumaluminat, Aluminiumhydroxid, Aluminiumsulfat, Aluminiumnitrat, Natriumsilikat (Wasserglas) oder Kieselsäure, in der wäßrigen Suspension ausgefällt.

Unter anorganischen Oxiden wie $Al_2O_3$ und $SiO_2$ sind auch die Hydroxide oder deren verschiedenen Entwässerungsstufen wie z. B. Oxidhydrate zu verstehen, ohne daß man deren genaue Zusammensetzung und Struktur kennt. Auf das $TiO_2$-Pigment werden nach dem Glühen und Mahlen in wäßriger Suspension die Oxidhydrate z. B. des Aluminiums und/oder Siliciums gefällt, die Pigmente dann gewaschen und getrocknet. Diese Auffällung kann somit direkt in einer Suspension geschehen, wie sie im Herstellungsprozeß nach der Glühung und der sich anschließenden Naßmahlung anfällt. Die Auffällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wäßriger Lösung (pH kleiner 4) eingesetzt und durch Zugabe von wäßriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Auffällung erfolgt dann durch Zugabe von Mineralsäure wie Schwefelsäure im pH-Bereich von 5 bis 8. Nach der Auffällung der Metalloxide wird die Suspension noch 15 min bis etwa 2 h gerührt, wobei die aufgefällten Schichten eine Alterung erfahren. Das beschichtete Produkt wird von der wäßrigen Dispersion abgetrennt und nach dem Waschen bei erhöhter Temperatur, insbesondere bei 70 bis 110 °C, getrocknet.

Titandioxidteilchen der vorstehend beschriebenen Art können entweder in der Basisschicht oder in der Zwischenschicht oder in beiden Schichten erfindungsgemäß enthalten sein. Der Weißgrad und damit auch der Lichtschutz der gesamten Folie ist unmittelbar abhängig von der Gesamtmenge an Titandioxid und soll erfindungsgemäß wenigstens 80 oder mehr, bevorzugt 85 bis 100, betragen.

Die auf die Zwischenschicht aufgebrachte Deckschicht kann sowohl eine heiß- als auch eine kaltsiegelfähige Schicht sein. Es können auch beidseitig Deckschichten aus Siegelrohstoff vorliegen. Die beidseitigen Deckschichten können aus dem gleichen oder verschiedenen Materialien bestehen. Eine Heißsiegelschicht hat einen Erweichungspunkt, der mindestens 10 °C niedriger als der Erweichungspunkt der Basisschicht oder der Zwischenschicht ist. Die Siegelschicht besteht vorzugsweise aus einem Ethylenhomopolymerisat (Polyethylen hoher Dichte oder Polyethylen niedriger Dichte), einem LLDPE, einem Copolymerisat aus Propylen als Hauptkomponente und Ethylen, vorzugsweise mit einem Ethylen-Anteil von 4 bis 10 Gew.-% (bezogen auf das Copolymerisat), einem Copolymerisat aus Propylen als Hauptkomponente und Buten-(1), vorzugsweise mit einem Buten-Anteil von 10 bis 15 Gew.-% (bezogen auf das Copolymerisat), einem Terpolymerisat aus Propylen, Ethylen und einem Alpha-Olefin mit 4 bis 10 C-Atomen, vorzugsweise einem solchen aus 93,2 bis 99,0 Gew.-% Propylen, 0,5 bis 1,9 Gew.-% Ethylen und 0,5 bis 4,9 Gew.-% eines Alpha-Olefins mit 4 bis 10 C-Atomen oder aus einer Mischung dieser Polymeren. Die Comonomeren sind in den Polymerisaten im wesentlichen statistisch verteilt. Als besonders bevorzugte Siegelschichten werden statistische Alpha-Olefin-Copolymere eingesetzt, bei denen das Verhältnis zwischen Gewichtsmittelwert $M_W$ der Molmassenverteilung und dem Zahlenmittelwert $M_N$ der Molmassenverteilung zwischen 2,5 und 5,5 liegt. Die Copolymere können vorzugsweise peroxidisch abgebaut sein.

Bei dem bestimmungsgemäßen Einsatz der Folie als Verpackungsmaterial ist der bzw. den Deckschichten zur Verbesserung der Gleitfähigkeit im Hinblick auf eine zufriedenstellende Maschinengängigkeit und im Hinblick auf ein reibungsloses Einfüllen des verpackten Packguts in Beutel vorzugsweise zusätzlich Gleitmittel zugefügt. Als Gleitmittel wird zweckmäßigerweise ein Polydialkylsiloxan, vorzugsweise mit 1 bis 4 C-Atomen in der Alkylgruppe, eingesetzt, wobei Polydimethylsiloxan besonders bevorzugt ist. Die Einsatzmenge des Polydialkylsiloxans in der Deckschicht bzw. den Deckschichten beträgt 0,2 bis 2,5 Gew.-%, vorzugsweise 0,5 bis 1,6 Gew.-%, bezogen auf das Gewicht der Deckschichten.

Insbesondere zur Verbesserung der Konfektionierbarkeit kann der Deckschicht bzw. den Deckschichten 0,1 bis 1 Gew.-%, insbesondere 0,2 bis 0,5 Gew.-%, eines organischen oder anorganischen Antiblockmittels zugesetzt werden. Geeignete Antiblockmittel sind beispielsweise organische Polymerisate wie Polyamid, Polyester, Polycarbonate und dergleichen, die mit dem Polymer in der Deckschicht unverträglich sind und in Form von Partikeln vorliegen, oder anorganische Partikel, insbesondere Siliciumdioxid.

Die Folie kann durch übliche Verfahrenstechnologien zur Herstellung von mehrschichtigen Folien hergestellt werden. So kann die Folie durch Extrusion der Trägerschicht bzw. durch Coextrusion der die einzelnen Schichten bildenden schmelzflüssigen Polymermaterialien durch eine Flachdüse, Abschreckung und Verfestigung des Schmelzfilms, anschließendes biaxiales Streckorientieren in Längs- und Querrichtung und abschließendes Hitzefixieren hergestellt werden. Zum biaxialen Strecken wird die Folie erhitzt und zuerst in Längsrichtung und anschießend in Querrichtung oder zuerst in Querrichtung und dann in Längsrichtung gestreckt. Die Längsstreckung erfolgt beispielsweise bei 120 bis 130 °C im Verhältnis 5:1 bis 7:1 und die anschließende Querstreckung bei 160 bis 170 °C im Verhältnis 8:1 bis 10:1, die Hitzefixierung bei 150 bis 160 °C etwa 0,5 bis 10 s lang. Die Oberfläche(n) der Deckschicht(en) können erforderlichenfalls nach der Hitzefixierung noch einer Oberflächenbehandlung unterzogen werden, um der Folie für das Aufbringen weiterer Beschichtungen eine verbesserte Aufnahmefähigkeit zu verleihen und um ihre Verklebbarkeit bzw. Kaschierbarkeit oder Bedruckbarkeit oder Metallisierbarkeit zu verbessern.

Geeignete Kaltsiegelschichten bestehen aus Polymerisaten auf der Basis von natürlichem oder synthetischem Kautschuk. Geeignete äußere Deckschichten bestehen auch aus Acrylaten, wie sie in der EP-A-0 214 790, EP-A-0 254 417 und CH-PS 632 777 beschrieben sind, oder aus Vinylidenchlorid-Copolymerisaten, wie sie in der EP-A-088 535 genannt sind. Diese Verbindungen können bei Bedarf mit einer haftvermittelnden Schicht auf der darunterliegenden Schicht aus Polyolefin verankert werden. Geeignete Primer (Haftvermittler) sind ebenfalls in den genannten Schriften aufgeführt. Während die Kaltsiegelschichten ausschließlich in einem separaten Verfahrensschritt aufgebracht werden (off-line), können die Acrylate bzw. Vinylidenchlorid-Copolymerisate auch in-line vor der Längsstreckung aufgebracht werden. Das In-line-Verfahren ist z. B. in der EP-A-0 214 790 beschrieben.

Die erfindungsgemäße Folie kann zusätzlich zu ihrem dreischichtigen Aufbau und der gegebenenfalls als vierte Schicht vorhandenen weiteren Deckschicht zusätzlich auch noch eine weitere Zwischenschicht aufweisen, die zwischen der Basisschicht und der weiteren Deckschicht angeordnet ist.

Die Gesamtdicke der Folie beträgt 25 bis 120, vorzugsweise 30 bis 60 Mikrometer, wobei die Dicke der Deckschicht(en) jeweils 0,1 bis 5, vorzugsweise 0,6 bis 2 Mikrometer beträgt, die Dicke der Zwischenschicht oder der Zwischenschichten liegt im Bereich von 0,5 bis 5 $\mu$m, vorzugsweise von 0,3 bis 3 $\mu$m.

Um bestimmte Eigenschaften der erfindungsgemäßen Folie noch weiter zu verbessern, können sowohl die Basisschicht als auch die Zwischen- oder Deckschicht(en) entsprechende Zusätze in einer jeweils wirksamen Menge enthalten, vorzugsweise seien Antistatika, z. B. N,N-Bisethoxyalkylamin, und Nukleierungsmittel, z. B. Sorbitole, genannt. Als positiv hat sich insbesondere der Zusatz von Verarbeitungsstabilisatoren zur Basisschicht erwiesen. Hierbei handelt es sich um Verbindungen, die den thermischen Abbau der Polymeren bei der Herstellung der Folie verhindern sollen. Zu diesen Verbindungen gehören Phosphitstabilisatoren und/oder Diphosphitstabilisatoren wie z. B. Tris-(2,4-ditert.butylphenyl)phosphit und Bis-(2,4-ditert.butylphenyl)pentaerythrit-diphosphit in Mengen von 0,05 bis 0,3 Gew.-%, bezogen auf die Basisschicht. Als besonders vorteilhaft hat sich ferner der Zusatz von optischem Aufheller, z. B. Bisbenzoxazole, Bis-(styryl)-biphenyle, Triazin-phenylcumarine oder Benzotriazolphenylcumarine, erwiesen, der in einer Menge von 100 bis 500 ppm, insbesondere 150 bis 250 ppm, bezogen auf die Basisschicht, eingesetzt wird. Weiterhin können den Zwischenschichten vorteilhaft natürliche oder synthetische niedrigmolekulare Harze, insbesondere Kohlenwasserstoffharze (KWH), zugesetzt werden. Derartige niedrigmolekulare Harze zeigen einen Erweichungspunkt im Bereich von 60 bis 180°C, vorzugsweise von 80 bis 130°C.

Die vorstehend in allen Einzelheiten genauestens beschriebene erfindungsmäßige Folie zeigt einen hohen Weißgrad (> 80), gute mechanische Eigenschaften, eine Dichte von nicht größer als 0,92 g/cm$^3$ und zumindest einseitig einen hohen Glanz (größer 50, Meßwinkel 20 °). Zudem ist die Folie gut siegelfähig und gut bedruckbar.

Die Erfindung wird durch die nachfolgenden Beispiele näher erläutert.

**Beispiel 1**

Fünfschichtige symmetrische Folie mit folgendem Aufbau:

A-Basisschicht:

| 93,05 Gew.- % | Polypropylenhomopolymerisat mit einem Schmelzindex von 4,5 g/10 min (230 °C, 21,6 N) |
| 6,0 Gew.-% | Titandioxid (Rutil) mit einem mittleren Teilchendurchmesser von 0,2 $\mu$m mit anorganischer Beschichtung aus $Al_2O_3$ und organischer Beschichtung aus Stearinsäure |
| 0,8 Gew.-% | Calciumcarbonat mit einem mittleren Teilchendurchmesser von 1,5 $\mu$m |
| 0,15 Gew.-% | N,N-bis-ethoxyalkylamin |

B,C-Zwischenschichten

| 97,0 Gew.-% | Polypropylenhomopolymerisat mit einem Schmelzindex von 5 g/10 min (230 °C, 21,6 N) |
| 3,0 Gew.-% | Titandioxid wie in Schicht A |

D,E-Deckschichten

| 99,8 (98,8) Gew.-% | Ethylen-Propylen-Copolymerisat mit einem Schmelzindex von 5 g/10 min (230 °C, 21,6 N) |
| 0,2 Gew.-% | Siliciumdioxid mit einem mittleren Teilchendurchmesser von 3 $\mu$m |
| 1,0 Gew.-% | Polydimethylsiloxan; wird nur in die nicht coronabehandelte Deckschicht eingearbeitet |

| | |
|---|---|
| Dicke der Folie: | 30 $\mu$m |
| Dicke von Schicht A: | 20,8 $\mu$m |
| Dicke der Schichten B, C: | 4 $\mu$m |
| Dicke der Schichten D, E: | 0,6 $\mu$m |

Die Folie wird nach Coextrusion der Vorfolie wie üblich längs und dann quer verstreckt. Die Folie hat die in der Tabelle am Ende der Beschreibung genannten physikalischen Eigenschaften. Die in der Tabelle angegebenen Meßwerte sind dabei wie folgt bestimmt worden:

Die Bestimmung des Weißgrades nach Berger erfolgt mit Hilfe des elektrischen Remissionsphotometers "ELREPHO" der Firma Zeiss, Oberkochem (DE), Normlichtart C, 2° Normalbeobachter. Der Weißgrad wird definiert als

$$WG = RY + 3RZ - 3RX.$$

WG = Weißgrad, RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet.

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert beziehungsweise gestreut. Die auf den photoelektronischen Empfänger auffallenden Lichtstrahlen werden als proportionale elektrische Größe angezeigt. Der Meßwert ist dimensionslos und muß mit dem Einstrahlwinkel zusammen angegeben werden.

Der Elastizitätsmodul (E-Modul) und die Reißfestigkeit werden nach DIN 53 457 bestimmt.

**Beispiel 2:**

Vierschichtige unsymmetrische Folie mit folgendem Aufbau.

| A-Basisschicht: | wie in Beispiel 1 |
| B-Zwischenschicht: | wie in Beispiel 1 |
| C,D-Deckschichten: | wie in Beispiel 1 |

Die Folie ist jetzt nur einseitig hochglänzend.

**Beispiel 3**

Fünfschichtige Folie mit folgendem symmetrischem Aufbau

| A-Basisschicht: | wie in Beispiel 1, jedoch 7,0 Gew.-% Titandioxid |
| B,C-Zwischenschichten: | wie in Beispiel 1, jedoch ohne Titandioxid |
| D,E-Deckschichten: | wie in Beispiel 1 |

**Beispiel 4**

Fünfschichtige Folie mit folgendem symmetrischem Aufbau.

| A-Basisschicht: | wie in Beispiel 3 |
| B,C-Zwischenschichten: | wie in Beispiel 3, jedoch zusätzlich 5,0 % KWH |
| D,E-Deckschichten: | wie in Beispiel 3 |

**Vergleichsbeispiel 1**

Aufbau wie in Beispiel 1, jedoch ohne Calciumcarbonat in der Basis. Die Dichte dieser Folie ist wesentlich höher als die Dichte von erfindungsgemäßen Folien. Damit ist die Flächenausbeute der Folie geringer, d. h. die Fläche der in kg gelieferten Folienrolle ist zu gering.

| Eigenschaften Folie | Weißgrad | Dichte kg/dm³ | Glanz oben/unten | Reißfestigkeit N/mm² längs/quer | E-Modul N/mm² längs/quer |
|---|---|---|---|---|---|
| Beispiel 1 | 90 | 0,91 | 62/62 | 135/300 | 2200/4500 |
| Beispiel 2 | 90 | 0,905 | 62/10 | 130/280 | 2100/4400 |
| Beispiel 3 | 92 | 0,91 | 65/65 | 135/300 | 2200/4500 |
| Beispiel 4 | 92 | 0,91 | 68/68 | 140/310 | 2350/4670 |
| Vergleichsbeispiel 1 | 91 | 0,98 | 62/62 | 135/300 | 2200/4500 |

**Patentansprüche**

1. Mehrschichtige weiße, biaxial orientierte Polypropylenfolie, dadurch gekennzeichnet, daß sie wenigstens einen dreischichtigen Aufbau besitzt, umfassend eine Basisschicht aus Propylenpolymeren enthaltend bis zu 2 Gew.-% wobei 2 Gew.-% ausgenommen werden Calciumcarbonat mit einer mittleren Teilchengröße bis höchstens 2,0 μm und 0 bis 25 Gew.-% Titandioxid, bezogen jeweils auf das Gesamtgewicht der Basisschicht, eine Zwischenschicht aus Propylenpolymeren enthaltend 0 bis 25 Gew.-% Titandioxid, bezogen auf das Gesamtgewicht der Zwischenschicht, und eine Deckschicht aus Siegelrohstoff, und daß die Folie insgesamt wenigstens 2 Gew.-% Titandioxid enthält, bezogen auf das Gesamtgewicht der Folie.

2. Folie nach Anspruch 1, dadurch gekennzeichnet, daß das Propylenpolymere der Basisschicht bzw. der Zwischenschicht ein isotaktisches Homopolymerisat oder Copolymerisat des Propylens mit Ethylen oder Alpha-Olefinen mit 4 bis 8 C-Atomen ist oder eine Mischung aus Propylenhomo- und Propylencopolymerisaten und/oder anderen Polyolefinen, insbesondere mit 2 bis 6 C-Atomen, wobei die Mischung mindestens 50, insbesondere mindestens 75 Gew.-% Propylenhomopolymerisat enthält.

3. Folie nach Anspruch 1 und/oder 2, dadurch gekennzeichnet, daß das Calciumcarbonat in einer Menge von nicht mehr als 1,5 Gew.- %, bezogen auf das Gewicht der Basisschicht, vorhanden ist, bevorzugt im Bereich zwischen 0,3 und 1,0 Gew.-%.

4. Folie nach einem oder mehreren der Ansprüche 1 bis 3, dadurch gekennzeichnet, daß der mittlere Partikeldurchmesser der Calciumcarbonatteilchen 2 μm beträgt, vorzugsweise zwischen 0,9 und 1,5 μm liegt.

5. Folie nach einem oder mehreren der Ansprüche 1 bis 4, dadurch gekennzeichnet, daß das Titandioxid in der Basisschicht eine mittlere Teilchengröße im Bereich von 0,10 bis 0,30 μm besitzt.

6. Folie nach einem oder mehreren der Ansprüche 1 bis 5, dadurch gekennzeichnet, daß der Siegelrohstoff ein Kaltsiegelrohstoff ist.

7. Folie nach einem oder mehreren der Ansprüche 1 bis 5, dadurch gekennzeichnet, daß der Siegelrohstoff Ethylenhomopolymerisat, Copolymerisat aus Propylen als Hauptkomponente und Ethylen, vorzugsweise mit einem Ethylenanteil von 4 bis 10 Gew.-%, bezogen auf das Gesamtgewicht des Copolymerisates, Copolymerisat aus Propylen als Hauptkomponente und Buten-(1), vorzugsweise mit einem Butenanteil von 10 bis 15 Gew.-%, bezogen auf das Gesamtgewicht des Copolymerisates, Terpolymerisat aus Propylen, Ethylen und einem Alpha-Olefin mit 4 bis 10 C-Atomen, vorzugsweise einem solchen aus 93,2 bis 99,0 Gew.-% Propylen, 0,5 bis 1,9 Gew.-% Ethylen und 0,5 bis 4,9 Gew.-% eines Alpha-Olefins mit 4 bis 10 C-Atomen, oder eine Mischung dieser Polymeren enthält.

8. Folie nach einem oder mehreren der Ansprüche 1 bis 7, dadurch gekennzeichnet, daß sie eine weitere Deckschicht enthält.

9. Folie nach Anspruch 8, dadurch gekennzeichnet, daß zwischen der weiteren Deckschicht und der Basisschicht eine weitere Zwischenschicht angeordnet ist.

10. Folie nach einem oder mehreren der Ansprüche 1 bis 9, dadurch gekennzeichnet, daß der bzw. den Deckschicht/en zur Verbesserung der Gleitfähigkeit zusätzlich Gleitmittel zugefügt sind, vorzugsweise ein Polydialkylsiloxan mit 1 bis 4 C-Atomen in der Alkylgruppe, und daß die Deckschicht/en 0,1 bis 1 Gew.-%, insbesondere 0,2 bis 0,5 Gew.-%, eines organischen oder anorganischen Antiblockmittels enthält/enthalten, insbesondere Siliciumdioxid.

11. Folie nach einem oder mehreren der Ansprüche 1 bis 10, dadurch gekennzeichnet, daß sie mindestens drei Schichten umfaßt und einen Weißgrad gemessen nach Berger von größer 80, insbesondere von größer 90, und eine Dichte von 0,90 bis 0,92 g/cm$^3$ aufweist.

12. Verpackungen, dadurch gekennzeichnet, daß sie eine Folie nach einem oder mehreren der Ansprüche 1 bis 11 enthalten.

13. Verfahren zur Herstellung einer Folie nach Anspruch 1, bei welchem die Folie hergestellt wird durch Coextrusion der die einzelnen Schichten bildenden schmelzflüssigen Polymermaterialien, durch eine Flachdüse Abschreckung und Verfestigung des Schmelzefilms und anschließendes biaxiales Streckorientieren in Längs- und Querrichtung und abschließendes Hitzefixieren, dadurch gekennzeichnet, daß die Längsstreckung bei einer Temperatur von 120 bis 130°C und mit einem Verhältnis von 5:1 bis 7:1 und die Querstreckung bei einer Temperatur von 160 bis 170°C und mit einem Verhältniss von 8:1 bis 10:1 erfolgt.

**Claims**

1. A multilayer white, biaxially oriented polypropylene film, which has at least a three-layer structure, comprising a base layer of propylene polymers containing up to 2% by weight, with the exception of 2% by weight, of calcium carbonate having a mean particle size of up to not more than 2.0 μm and from 0 to 25% by weight of titanium dioxide, based in each case on the total weight of the base layer, an intermediate layer of propylene polymers containing from 0 to 25% by weight of titanium dioxide, based on the total weight of the intermediate layer, and a top layer of sealant raw material, and wherein the film contains altogether at least 2% by weight of titanium dioxide, based on the total weight of the film.

2. The film as claimed in claim 1, wherein the propylene polymer of the base layer or of the intermediate layer is an isotactic homopolymer or copolymer of propylene with ethylene or alpha-olefins having 4 to 8 carbon atoms or a mixture of propylene homopolymers and propylene copolymers and/or other polyolefins, in particular having 2 to 6 carbon atoms, the mixture containing at least 50, in particular at least 75, % by weight of propylene homopolymer.

3. The film as claimed in claim 1 and/or 2, wherein the calcium carbonate is present in an amount of not more than 1.5% by weight, based on the weight of the base layer, preferably in the range from 0.3 to 1.0% by weight.

4. The film as claimed in one or more of claims 1 to 3, wherein the mean particle diameter of the calcium carbonate particles is 2 μm, preferably from 0.9 to 1.5 μm.

5. The film as claimed in one or more of claims 1 to 4, wherein the titanium dioxide in the base layer has a mean particle size in the range from 0.10 to 0.30 μm.

6. The film as claimed in one or more of claims 1 to 5, wherein the sealant raw material is a cold sealant raw material.

7. The film as claimed in one or more of claims 1 to 5, wherein the sealant raw material contains an ethylene homopolymer, a copolymer of propylene as the main component and ethylene, preferably with an ethylene content of from 4 to 10% by weight, based on the total weight of the copolymer, a copolymer of propylene as the main component and but-1-ene, preferably with a butene content of from 10 to 15% by weight, based on the total weight of the copolymer, terpolymer of propylene, ethylene and an alpha-olefin having 4 to 10 carbon atoms, preferably one comprising from 93.2 to 99.0% by weight of propylene, 0.5 to 1.9% by weight of ethylene and from 0.5 to 4.9% by weight of an alpha-olefin having 4 to 10 carbon atoms, or a mixture of these polymers.

8. The film as claimed in one or more of claims 1 to 7, which contains a further top layer.

9. The film as claimed in claim 8, wherein a further intermediate layer is arranged between the further top layer and the base layer.

10. The film as claimed in one or more of claims 1 to 9, wherein lubricants are also added to the top layer or layers for improving the slidability, preferably a polydialkylsiloxane having 1 to 4 carbon atoms in the alkyl group, and wherein the top layer or layers contains or contain from 0.1 to 1% by weight, in particular from 0.2 to 0.5% by weight, of an organic or inorganic antiblocking agent, in particular silica.

11. The film as claimed in one or more of claims 1 to 10, which comprises at least three layers and has a whiteness, measured according to Berger, of more than 80, in particular more than 90, and a density of from 0.90 to 0.92 $g/cm^3$.

12. A packaging which contains a film as claimed in one or more of claims 1 to 11.

13. A process for the production of a film as claimed in claim 1, in which the film is produced by coextrusion of the molten polymer materials forming the individual layers through a sheet die, quenching and solidification of the melt film and subsequent biaxial orientation in the longitudinal and transverse direction and final heat-fixing, wherein the longitudinal stretching is effected at a temperature of from 120 to 130°C and with a ratio of from 5:1 to 7:1 and the transverse stretching at a temperature of from 160 to 170°C and with a ratio of from 8:1 to 10:1.

**Revendications**

1. Film en polypropylène orienté biaxial, blanc, multicouche, caractérisé en ce qu'il possède une constitution au moins en trois couches, comprenant une couche de base en polymère de propylène, contenant jusqu'à 2 % en poids, 2 % en poids étant exclus, de carbonate de calcium, avec un diamètre moyen de particules d'au plus 2,0 mm, et de 0 à 25 % en poids de dioxyde de titane, rapportés chaque fois au poids total de la couche de base, une couche intermédiaire en polymère de propylène, contenant de 0 à 25 % en poids de dioxyde de titane, rapportés au poids total de la couche intermédiaire, et une couche de couverture en matière première de scellement, et en ce que le film au total contient au moins 2 % en poids de dioxyde de titane, rapportés au poids total du film.

2. Film selon la revendication 1, caractérisé en ce que le polymère de propylène de la couche de base ou de la couche intermédiaire est un homopolymère ou un copolymère isotactique du propylène avec de l'éthylène ou des alpha-oléfines comportant de 4 à 8 atomes de carbone, ou un mélange d'homopolymères de propylène et de copolymères de propylène et/ou d'autres polyoléfines, en particulier comportant de 2 à 6 atomes de carbone, le mélange contenant au moins 50, en particulier au moins 75 % en poids, d'homopolymère de propylène.

3. Film selon les revendications 1 et/ou 2, caractérisé en ce que le carbonate de calcium est présent à raison de pas plus de 1,5 % en poids, rapporté au poids de la couche de base, et de préférence dans l'intervalle compris entre 0,3 et 1,0 % en poids.

4. Film selon une ou plusieurs des revendications 1 à 3, caractérisé en ce que le diamètre moyen des particules de carbonate de calcium est de 2 mm, de préférence est compris entre 0,9 et 1,5 mm.

5. Film selon une ou plusieurs des revendications 1 à 4, caractérisé en ce que le dioxyde de titane dans la couche de base possède une dimension moyenne de particules dans l'intervalle de 0,10 à 0,30 mm.

6. Film selon une ou plusieurs des revendications 1 à 5, caractérisé en ce que la matière première de scellement est une matière première de scellement à froid.

7. Film selon une ou plusieurs des revendications 1 à 5, caractérisé en ce que la matière première de scellement contient de l'homopolymère d'éthylène, du copolymère de propylène comme composants principaux et de l'éthylène, de préférence avec une teneur en éthylène de 4 à 10 % en poids, rapportés au poids total du copolymère, du copolymère de propylène comme composant principal et du butène-1, de préférence avec une teneur en butène de 10 à 15 % en poids, rapportés au poids total de copolymère, du terpolymère de propylène, d'éthylène et d'une alpha-oléfine comportant de 4 à 10 atomes de carbone, de préférence un terpolymère composé de 93,2 à 99,0 % en poids de propylène, de 0,5 à 1,9 % en poids d'éthylène et de 0,5 % à 4,9 % en poids d'une alpha-oléfine comportant de 4 à 10 atomes de carbone, ou un mélange de ces polymères.

8. Film selon une ou plusieurs des revendications 1 à 7, caractérisé en ce qu'il contient une autre couche de couverture.

9. Film selon la revendication 8, caractérisé en ce que, entre l'autre couche de couverture et la couche de base, est disposée une autre couche intermédiaire.

10. Film selon une ou plusieurs des revendications 1 à 9, caractérisé en ce que, à la ou aux couche(s) de couverture, pour améliorer le pouvoir antiadhérent, on ajoute en plus des lubrifiants, de préférence un polydialkylsiloxane comportant de 1 à 4 atomes de carbone dans le groupe alkyle, et en ce que, la ou les couche(s) de couverture contient ou contiennent de 0,1 à 1 % en poids, en particulier de 0,2 à 0,5 % en poids, d'un agent antiadhérent organique ou minéral, en particulier du dioxyde de silicium.

11. Film selon une ou plusieurs des revendications 1 à 10, caractérisé en ce qu'il contient au moins trois couches et présente un degré de blanc, mesuré selon Berger, supérieur à 80, en particulier supérieur à 90, et une densité de 0,90 à 0,92 $g/cm^3$.

12. Emballages caractérisés en ce qu'ils contiennent un film selon une ou plusieurs des revendications 1 à 11.

13. Procédé de fabrication d'un film selon la revendication 1, dans lequel le film est fabriqué par coextrusion des matériaux polymères liquides en fusion, formant les différentes couches, à travers une filière plate, par trempe et durcissement du film fondu et orientation par étirage ultérieur dans le sens de la longueur et le sens transversal, et par fixage thermique final, caractérisé en ce que l'étirage dans le sens de la longueur s'effectue à une température de 120 à 130°C et dans un rapport de 5:1 à 7:1, et l'étirage dans le sens transversal, à une température de 160 à 170°C et dans un rapport de 8:1 à 10:1.

FIGUR 1

Folie mit 0,8 Gew.-% Calciumcarbonat

FIGUR 2

Folie mit 4,0 Gew.-% Calciumcarbonat